# EUROPEAN PATENT APPLICATION

(11) **EP 0 983 874 A2**
(43) Date of publication of application: **08.03.2000**
(21) Application number: 99306197.7
(22) Date of filing: 04.08.1999
(51) Int. Cl.: B60B 19/00

(54) **A wheel**

(30) Priority: 21.08.1998 GB 9818252
(71) Applicant: Black & Decker Inc., Newark Delaware 19711 (US)
(72) Inventor: Stones, Kevin, Bishop Auckland, County Durham DL 14 6A (GB); Bone, Graham, Langley Moor, Durham DH7 8LW (GB)
(74) Representative: Harries, Simon George (GB)

(57) **Abstract**

A wheel, roller or track comprising a ground engagement surface and at least one peripheral roller (16, 17) which forms at least part of the ground engagement surface and which is arranged so that, when the peripheral (16, 17) is in contact with the ground (20), the wheel, roller or track is capable of moving forward or sliding sideways.

## Description

The present invention relates to rolling mechanisms.

Many types of vehicles and appliances are supported on wheels, rollers or tracks (herein referred to collectively as "rolling mechanisms" throughout the specification) to allow the vehicle or appliance to traverse over a surface. Such vehicles and appliances include lorries, buses, cars, motorbikes, lawn mowers, vacuum cleaners, wheel barrows, bikes, pushchairs, wheelchairs and trolleys which are mounted on wheels and tanks, bulldozers and cranes which are mounted on tracks.

The direction of the movement of a vehicle or appliance is dependent on the direction of travel of the wheels or tracks. Conventional designs of rolling mechanisms only have one direction of travel. In the case of a conventional wheel or roller, the direction of travel (i.e. the direction it is capable of rolling over a surface) is perpendicular to the axis of rotation of the wheel or roller. A track comprises a band which, for example, can be made from rubber or metal links and which is wrapped around a number of wheels and/or rollers. The wheels or rollers supporting the band arc aligned so that their axes of rotation are parallel. The direction of travel of a conventional design of a track is perpendicular to the axes of rotation of the wheels or rollers supporting the band.

When a vehicle or appliance is mounted on a number of rolling mechanisms, the direction of travel of the rolling mechanisms have to be co-ordinated in order for the vehicle or appliance to traverse the surface. If the vehicle or appliance is to traverse a surface along a straight path, the direction of travel of all the rolling mechanisms must be aligned so that all the various axes of rotation are parallel. If the vehicle or appliance is to traverse a surface along a curved path, the direction of travel of some of the rolling mcchanisms are angled in relation to others in such a manner to produce the desired effect.

Certain types of vehicles or appliances are designed to travel in a direction with its orientation fixed in relation to the direction of travel, for example, a car travels in manner so that the bonnet is at the front ahead of the boot which is at the rear. In other types of vehicle, the orientation of vehicle can be altered in relation to its direction of travel i.e. it can travel sideways or diagonally.

The direction of travel of a vehicle or appliance can be changed in two ways. Firstly, the relative orientation between the vehicle or appliance and the direction of travel of some or all of the rolling mechanisms can be adjusted, for instance, by turning the front wheels of a motor vehicle. Secondly, the orientation of the whole vehicle together with the rolling mechanisms can be adjusted, for example, a track laying vehicle mounted on two tracks changes direction by rotating one track at a different rate to the other track, thus rotating the whole of the vehicle, the angular position of direction of travel of the tracks remaining fixed relative to the vehicle at all times.

In certain situations, it is desirable that the direction of travel of the rolling mechanisms can be turned through a large angular range of positions. One such type of wheel which can enable this to be done is that of a castor wheel which is able to swivel through 360°. By mounting a vehicle or appliance on castor wheels, the vehicle or appliance is able to travel sideways or diagonally as well as in a straight line or along a curved path.

However, the amount of angular range through which the direction of travel of a rolling mechanism can be adjusted is often limited. For instance, the front wheels of a motor vehicle are only able to turn through a limited angular range due to the mechanical linkage required between the wheel and the output drive shaft of the engine of the vehicle. The use of castor wheels in such a situation would be impractical due to the complex mechanical linkage required to connect the drive shaft to the wheels whilst allowing the wheel to swivel. In the case of a track laying vehicle, the complexities of constructing the tracks of the tank so that their direction of travel can be altered in relation to the body of the tank would be of even greater complexity.

Accordingly, there is provided a rolling mechanism comprising a ground engagement surface and at least one peripheral roller mechanism which forms at least part of the ground engagement surface and which is arranged so that, when the peripheral roller mechanism is in contact with the ground the rolling mechanism is capable of moving in at least two directions of travel.

The meaning of the phrase roller mechanism shall encompass wheels and tracks in addition to rollers.

For the purposes of clarity, a direction of travel shall mean, in relation to wheels or rollers, the direction the wheel or roller traverses over a surface in relation to its axis of rotation and in relation to a track, the direction of travel of the track in relation to the axes of rotation of the wheels and/or rollers which support the band of the track. That is to say, for example, a wheel capable of moving in two directions of travel may be able to move perpendicularly to its axis of rotation in a similar manner to a conventional wheel (a first direction of travel) and parallel to its axis of rotation (a second direction of travel).

The peripheral roller mechanism can either be a conventional rolling mechanism or rolling mechanism as described within this specification.

When the peripheral roller mechanism of the rolling mechanism is in contact with the ground, the rolling mechanism is able to travel in two directions along the ground without sliding or being forced to slide over the ground. The rolling mechanism is capable of moving over the ground in a first direction by, in the case of a wheel or roller, rotation about its axis of rotation, and in the case of a track, rotation of the band around its support wheels and/or rollers. The rolling mechanism is capable of moving over the ground in a second direction of travel by, in the case where the peripheral roller mechanism is a wheel or roller, rotation of the peripheral roller mechanism about its axis of rotation and in the case where the peripheral roller mechanism is a track, rotation of the band of the peripheral roller mechanism about its support wheels and/or rollers. Such a rolling mechanism can be arranged so that it can travel in a range of directions of travel by a combination of the rotational movement of the rolling mechanism and the rotational movement of the peripheral roller mechanism.

Such a rolling mechanism is ideally suited for use on a vehicle or appliance where the range of movement of the direction of travel of the rolling mechanism in relation to the vehiclc, when a conventional rolling mechanism is used, is limited, for example, the front wheels on a motor vehicle and the tracks on a tank. When rolling mechanisms according to the present invention are used, the rolling mechanisms can have more than one direction of travel thus greatly increasing manoeuvrability of the vehicle, for example, it can be arranged for the front wheels of a vehicle to be able to slide sideways due to the rotation of the peripheral roller mechanism or travel forwards due to rotation of the rolling mechanism.

Preferably the direction of travel of the rolling mechanism due to the rotation of the peripheral roller mechanism is perpendicular to the direction of travel of the rolling mechanism due to the rotation of the rolling mechanism.

By arranging the direction of travel of the rolling mechanism due to rotation of the peripheral roller mechanism at 90° to the direction of travel of the rolling mechanism due to rotation of the rolling mechanisms, the rolling mechanism can be constructed so that the range of directions of travel is 360°. Furthermore, application of a driving or braking force to alter the rate of rotation of the rolling mechanism will not be transferred to or lost by the rotation of the peripheral roller mechanism thus providing a good frictional driving contact between the rolling mechanism and the ground in the direction of travel of the rolling mechanism due to rotation of the rolling mechanism.

The peripheral roller mechanism can be frictionally hindered. This can prevent movement of the rolling mechanism due to rotation of the peripheral roller mechanism when small forces are exerted on the rolling mechanism whilst allowing the movement of the rolling mechanism due to rotation of the peripheral roller mechanism when larger forces are exerted.

The peripheral roller mechanism can also be capable of being locked to prevent rotation of the peripheral roller mechanism. By constructing the rolling mechanism in this manner, the rolling mechanism can be converted into a conventional rolling mechanism by locking the peripheral roller mechanism.

Additionally or alternatively, the peripheral roller mechanism can be capable of being retracted into the rolling mechanism so that it no longer forms part of the ground engagement surface. This can provide an alternative way of enabling the rolling mechanism to be converted into a conventional rolling mechanism.

Ideally, the shape of the peripheral roller mechanism is such as to produce a smooth ground engagement surface when the peripheral roller mechanism is in contact with a surface. This allows the rolling mechanism to have a smooth ride over the surface which it is rolling over.

One type of peripheral roller mechanism is that of a roller.

The rolling mechanism can comprise a plurality of peripheral roller mechanisms. When there are a plurality of peripheral roller mechanisms the whole of the ground engagement surface can be formed by the peripheral roller mechanisms. By constructing the whole of the ground engaging surface with peripheral roller mechanisms, the benefits which can be gained when the peripheral roller mechanism is in contact with the surface, are available to the rolling mechanism through its full range rotational movement of the rolling mechanism.

Preferably, the direction of travel of the rolling mechanism due to rotation of any of the peripheral roller mechanisms when that peripheral roller mechanism is in contact with the ground is the same in relation to the direction of travel due to rotation of the rolling mechanism.

The peripheral roller mechanisms can be arranged sequentially in at least one line. The line can be along the length of the ground engagement surface or across the width of the ground engagement surface. However, it is preferable that there are at least two substantially parallel lines of peripheral roller mechanisms, the peripheral roller mechanisms in each line being aligned with a space between two adjacent peripheral roller mechanisms in the other line. This can provide a simple way of ensuring that the whole of the ground engagement surface is formed by the peripheral roller mechanisms whilst preventing any other part of the rolling mechanism from making contact with the surface over which it is travelling.

The shape of the sides of the peripheral roller mechanisms can be curved to produce a circular ground engagement surface.

Two specific embodiments of the invention will now be described with reference to the accompanying drawing of which:-
Figure 1 is a pcrspective view of a wheel (prior art);
Figure 2 is a side view of a wheel according to the first embodiment of the present invention;
Figure 3 is a perspective view of part of the wheel according to the first embodiment of the present invention; and
Figure 4 is a side view of part of a wheel according to the second embodiment of the present invention.

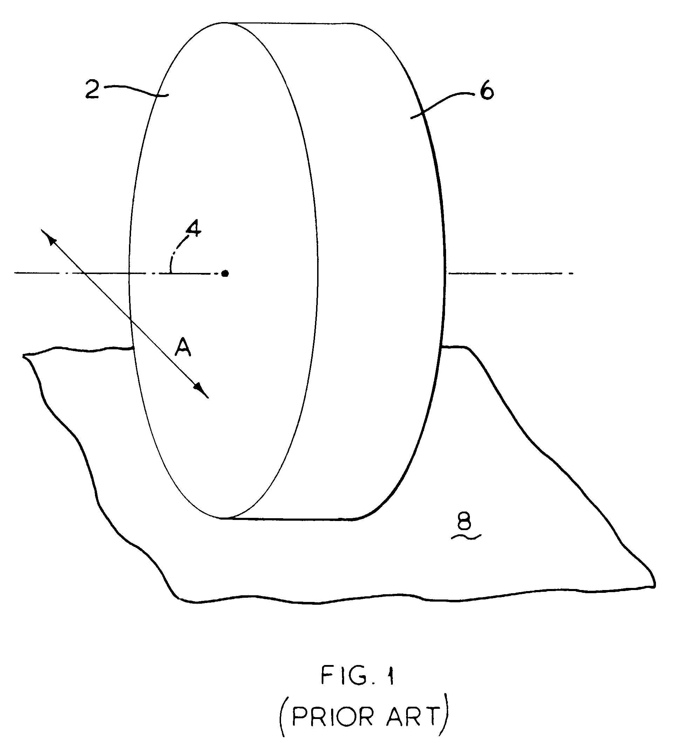

Figure 1 shows the known prior art, namely a wheel (2). The wheel (2) is capable of rotating about an axis (4), its direction of travel being perpendicular to the axis (4) of rotation (indicated by Arrow A). Around the periphery of the wheel (2) is a ground engagement surface (6), part of which is in contact with the ground (8) across which the wheel (2) is travelling. The ground engagement surface (6) makes frictional contact with the ground (8) to prevent the ground engagement surface (6) and hence the wheel (2) from sliding over the ground (8). Movement of the wheel (2) is generated by rotation of the wheel about its axis. The wheel (2) can be either driven by a motor of some kind or can freely rotate about its axis (4).

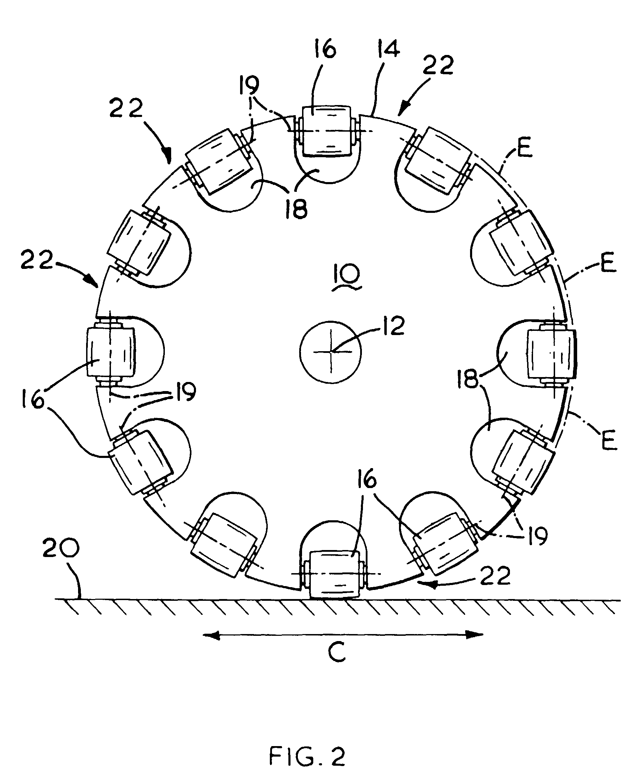

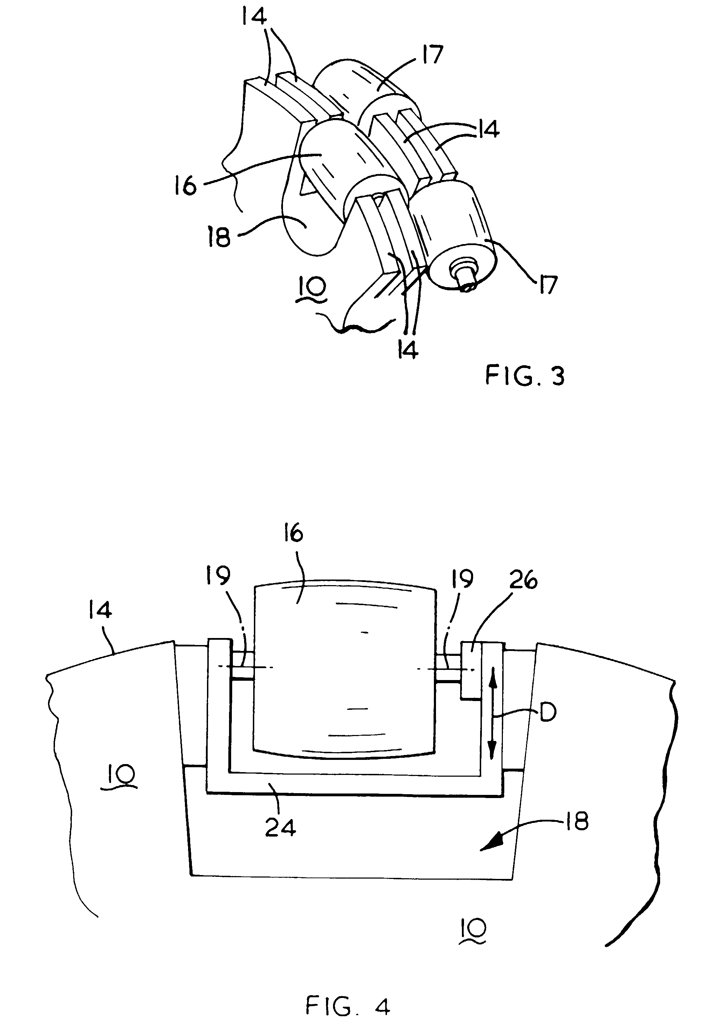

Figure 2 shows the first embodiment of the present invention. The wheel comprises an inner section (10) having a substantially circular cross section and which is capable of rotating about an axis (which projects perpendicularly out of the page of Figure 2 at a point indicated by reference number (12)). Around the edge (14) of the inner section (10) are two lines of rollers (16). Figure 2 only shows one line of rollers, the second being omitted for the clarity of Figure 2. Figure 3 shows the two lines of rollers (16, 17). The rollers in the first line are indicated by reference number (16), the rollers in the second line by reference number (17). The rollers (16, 17) are rotatably mounted in recesses (18) formed around the edge (14) as shown in Figure 2. The rollers (16, 17) are able to freely rotate about their axes (19) of rotation which is at a tangent to the axis of the inner section (10).

When the wheel is located on the ground (20), the rollers (16, 17) which are beneath the wheel make contact with the ground (20). As the wheel rolls over the ground (in the direction indicated by Arrow C) it rotates about its axis, so that successive rollers (16, 17) in each line of rollers (16, 17) come into and out of contact with the ground (20). No part of the inner section (10) of the wheel comes into contact with the ground (20), the rollers (16, 17) forming the whole of the ground engagement surface of the wheel. Each of the rollers (16, 17) is made from a material that provides a frictional contact between the periphery of the roller (16, 17) and ground (20). Because the axis (19) of rotation of the rollers (16, 17) in contact with the ground (20) is parallel to the forward/reverse direction of travel (indicated by Arrow C) of the wheel and the rollers (16, 17) make a frictional contact with the ground, there is no relative sliding movement of the inner section (10) and the ground (20) in the forward/reverse dircction of travel (Arrow C). Thereforc, a driving or braking force is able to be applied to the wheel in the direction of travel (Arrow C) without the wheel sliding in relation to the ground.

When a force is applied to the wheel in a direction other than the forward/reverse direction of travel for example perpendicularly to the forward/reverse direction of travel (e.g. parallel to the axis of rotation of the wheel), the rollers (16, 17) rotate about their axes, allowing the wheel to slide sideways in a direction other than the forward/reverse direction of travel (Arrow C) of the wheel.

Thus the wheel can travel across the ground in a forward/reverse direction of travel (Arrow C) due to the rotation of the wheel about its axis of rotation or sideways parallel to its axis of rotation due to the rotation of the rollers (16, 17), or in other directions due to a combination of the rotation of the wheel about its axis and the rotation of the rollers (16, 17).

The rollers (16, 17) in one line are off-set relative to the rollers in the other line as best shown in Figure 3. A gap (22) (as best shown in Figure 2) exists between adjacent rollers (16, 17) in each line. Each roller (16, 17) in one line is aligned with a gap in the other line. By off-setting the rollers (16, 17) in the two lines, a roller (16) in one of the line of rollers is in contact with the ground (20), when the corresponding gap between two adjacent rollers in the other line of rollers faces the ground, thereby ensuring the inner section (10) of the wheel between the rollers (16, 17) never comes into contact with the ground (10).

As can be seen in Figure 2, the sides of the rollers (16, 17) are curved along the length of the rollers (the line of curvature is indicated by the line E) so that there is smooth rolling action when the wheel rolls over the ground (20).

Figure 4 shows the second embodiment of the present invention. The wheel is constructed in a similar manner to that described in the first embodiment. However, each of the rollers (16, 17) is mounted on a support frame (24) and is connected to a control mechanism (26). The control mechanism (26) controls the rotation of the roller (16, 17) and is capablc of operating in three modes. In the first mode, the roller (16, 1 7) is able to freely rotate about its axis (19) of rotation in the same manner as in thc first embodiment. In the second mode, it applies a frictional force against the rotational movement of the roller (16, 17). Therefore, the rollers (16, 17) will only rotate about its axis (19) when sufficient force is applied to the roller (16, 17). This prevents the wheel sliding sideways due to small forces, but allows it to slide once sufficient force is applied to the wheel. In the third mode, the control mechanism (26) acts as a brake, locking the roller (16, 17) and preventing it from rotation. Thus, whilst the roller (16, 17) is locked, the wheel behaves as a conventional wheel.

The support frame enables the rollers (24) to be moved between two positions (in a direction indicated by Arrow D), a first position where the side of the roller (16, 17) projects beyond the inner section (10) so that it is capable of engaging the ground when the wheel rotates (as shown in Figure 4) and a second position where the roller (16, 17) is retracted into the recess (18) so that the outer edge of the inner section (10) makes contact with the ground.

The wheel as described in the two embodiments may be constructed so that only a section of periphery comprises rollers. Where the rollers are located around a section of the periphery of the wheel, the wheel shall be able to slide sideways only when that section is in contact with the ground.

Though the invention has been described with reference to the use of rollers (16, 17) placed around the periphery of a wheel, it will be clear to a person skilled in the art that the rollers (16, 17) could be used on the ground engaging surface of the band of a track or the outer surface of a roller. Similarly, the rollers (16, 17) arranged around the periphery of the wheel could be replaced by wheels, tracks, or a single roller which extends around part of or the whole periphery of the wheel. Furthermore, the invention has been described in relation to a wheel of a vehicle or appliance for traversing over a surface. It will be clear to a person skilled in the art that the invention could be used on rolling mechanisms located within a piece of equipment.

## Claims

1. A rolling mechanism comprising a ground engagement surface and at least one peripheral roller mechanism (16, 17) which forms at least part of the ground engagement surface and which is arranged so that, when the peripheral roller mechanism (16, 17) is in contact with the ground (20), the rolling mechanism is capable of moving in at least two directions of travel.

2. A rolling mechanism as claimed in Claim 1 wherein the direction of travel of the rolling mechanism due to the rotation of the peripheral roller mechanism (16, 17) is
perpendicular to the direction of travel of the rolling mechanism due to the rotation of the rolling mechanism.

3. A rolling mechanism as claimed in either of Claims 1 or 2 wherein rotational movement of the peripheral roller mechanism (16, 17) is frictionally hindered.

4. A rolling mechanism as claimed in any one of the previous claims wherein the peripheral roller mechanism (16, 17) is capable of being locked to prevent rotation of the peripheral roller mechanism (16, 17).

5. A rolling mechanism claimed in any one of the previous claims wherein the peripheral roller mechanism (16, 17) is capable of being retracted into the rolling mechanism so that it no longer forms part of the ground engagement surface.

6. A rolling mechanism as claimed in any one of the previous claims wherein the shape of the peripheral roller mechanism (16, 17) is such as to produce a smooth ground engagement surface when the peripheral roller mechanism (16, 17) is in contact with the ground.

7. A rolling mechanism as claimed in any one of the previous claims wherein the peripheral roller mechanism comprises a roller (16, 17).

8. A rolling mechanism as claimed in any one of the previous claims wherein there are a plurality of peripheral roller mechanisms (16, 17).

9. A rolling mechanism as claimed in Claim 8 wherein the whole of the ground engagement surface is formed by the peripheral roller mechanisms (16, 17).

10. A rolling mechanism as claimed in either of Claims 8 or 9 wherein the direction of travel of the rolling mechanism due to rotation of any of the peripheral roller mechanisms when that peripheral roller mechanism is in contact with the ground is the same in relation to the direction of travel due to rotation of the rolling mechanism

11. A rolling mechanism as claimed in any of the Claims 8 to 10 wherein the peripheral roller mechanisms are arranged sequentially in at least one line.

12. A rolling mechanism as claimed in Claim 11 wherein there are at least two substantially parallel lines of peripheral roller mechanisms (16, 17), the peripheral roller mechanism (16, 17) in each line being aligned with a space (22) between two adjacent peripheral roller mechanisms (16, 17) in the other line.

13. A rolling mechanism as claimed in any one of the Claims 8 to 12 wherein the peripheral roller mechanisms (16, 17) are arranged radially around an axis of rotation of the rolling mechanism.

14. A rolling mechanism as claimed in Claim 13 wherein the shape of the sides of the peripheral roller mechanisms (16, 17) are curved to produce a circular ground engagement surface.

15. A rolling mechanism as hereinbefore described with reference to the accompanying drawing.
